# EUROPEAN PATENT APPLICATION

(11) **EP 4 600 550 A1**
(43) Date of publication of application: **13.08.2025**
(21) Application number: 25152460.9
(22) Date of filing: 17.01.2025
(51) Int. Cl.: F21V 15/01, F21V 29/89, B31D 99/00, F21V 23/00, F21Y 115/10

(54) **LED LAMP**

(30) Priority: 08.02.2024 SE 2450125
(71) Applicant: Yousefzadegan, Hamid, 653 45 Karlstad (SE)
(72) Inventor: Yousefzadegan, Hamid, 653 45 Karlstad (SE)
(74) Representative: Bjerkén Hynell KB

(57) **Abstract**

This invention relates to a LED lamp, comprising a lamp base (1) and a lamp device (2) arranged at said lamp base (1) comprising a plurality of LED lamps (20), wherein said lamp base (1) mainly consists of cellulose fibers, wherein said lamp base (1) has a rectangular shape and to at least 90% consists of cellulose fibers and said LED lamps (20) are attached to a lamp device base (21) including a heat conducting layer (23) with a thermal conductivity of over 200 W/(m · K) and that each of said LED lamp (20) is of a kind emitting over 100 lumens /watt.

## Description

### TECHNICAL FIELD

This invention relates to a LED lamp, comprising a lamp base and a lamp device arranged at said lamp base comprising a plurality of LED lamps.

### BACKGROUND

Wall or ceiling lights, especially fixed assemblies, are very common in the private nd commercial sector, indoors. As is well known, ecology is playing an increasingly important role in all kind of products, so also lamps. The production of light itself has improved significantly with the advent of LEDs in terms of ecology, but the lights themselves and their production in terms of ecology, with regard to the materials used, have made little progress.

For example, WO 17/029147, CN 212430635 and AT 14025 U1 show various known lights, which all have complex structured light bodies made of many materials, which are complex to manufacture and also have a poor ecological footprint.

From WO2023021316 there is known a lamp frame that is made from cardboard, which may meet higher demands regarding ecology. However, the design thereof is limited to use of circular structures made from cardboard, which leaves out possibilities to meet ecological improvements regarding many desired design options.

### SUMMARY OF THE INVENTION

It is an object of the invention to improve upon the situation described above, which is achieved by means of a LED lamp according to claim 1.

Thanks to the invention an ecological LED lamp may be provided that also may be cost efficiently produced and may meet high market demands.

### DESCRIPTION OF FIGURES

In the following the invention will be described in more detail with reference to the enclosed figures, wherein,
Fig. 1 shows a first exemplary embodiment of a LED lamp seen from a cross sectional side view,
Fig. 2 shows a similar view as Fig. 1 of a second exemplary embodiment according to the invention,
Fig. 3 shows a more detailed view of the body of the lamp base,
Fig. 4 shows a view from above of an embodiment according to the invention,
Fig. 5 shows a similar view as Fig. 4 but from the bottom side according to the invention,

### DETAILED DESCRIPTION

In Fig, 1 there is shown a first exemplary embodiment in a schematic manner of a LED-lamp 1 according to the invention. The main object of the invention is to provide a LED lamp that may be produced in an environmentally friendly, ecological manner wherein cellulose fibers are the basic material forming at least main portion of the material in the supporting structure of the lamp base 1. Preferably, the lamp base 1 has a rectangular shape and to at least 90% consists of cellulose fibers.

It is shown a base body 10, which preferably presents a U-shape. Preferably the U-shaped base body 10 is formed by an integral body, having two side parts 100 and a bottom part 101. However, it is foreseen that substantially the same advantages can be achieved by using two joined L-shaped members (not shown) or one L-shaped member joined with an I-shaped member (not shown), to form the base body 10. At the inside 102 along the sides of the base body 10 there are arranged support members 12A, 12B. Inside of the support members 12A, 12B there is an open space 105 providing space for arranging needed power elements, e.g. cables, drive units, control units, etc, (not shown) as known per se, to enable the lamp to emit light.

The support members 12A, 12B support a lid 11 that is positioned to bridge the opening of the U-shaped base body 10. On top of the lid 11 there is positioned a LED lamp device 2.

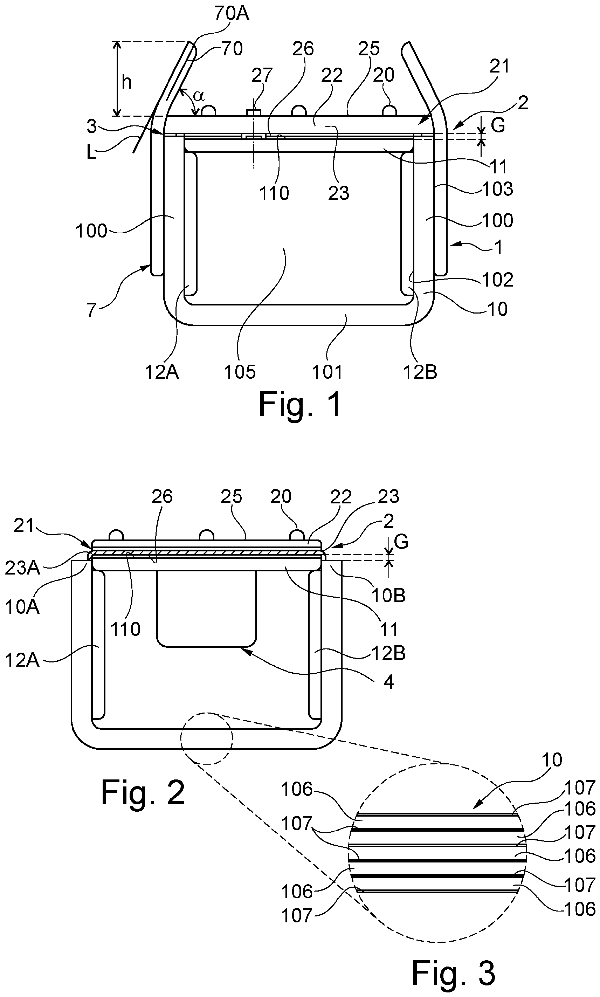

The LED lamp device 2 includes a basically flat rectangular lamp base 21 which carries a plurality of LED lamps 20, that protrude out from an outer surface 25 of the lamp base 21. Preferably there is arranged a gap G between the inner surface 26 of the lamp base 21 and the lamp lid 11. The gap G may be in the range of 0, 1- 5 mm, more preferred in the range 0,5 to 2 mm. The gap G may provide the advantage that improved cooling may be obtained, by enabling air to circulate also along the backside 26 of the lamp base 21. In the shown embodiment a distance member 27 is used to arrange for the gap G, e.g. a separate device such as a washer or similar device, that may easily be attached by means of a screw 27. In Fig. 1 it is shown that the lamp base 21 may be provided by an integral layer both providing a lamp fixation layer 22 and a heat conducting layer 23, having a thermal conductivity of over 200 W/(m · K), e.g. made in aluminium.

Furthermore there is that according to a preferred embodiment the base body 10 may be arranged with protecting devices 7 along each long side of the base body 10. Each protection device 7 has a protruding end 70 that protrudes a distance h further than the upper surface 25 of the lamp base 21. Accordingly, there will be positioned a front edge 70A a distance h away from the outer surface 25 of the 21. The protection devices 7 will hinder objects to hit and possibly destroy the lamp base 21, which e.g. may occur in sport arenas, such as hockey arenas etc. In arenas having large amount of LED lamps 1 destroyed lamps 1 may add up to significant cost, due to malfunction as a result to being hit by a ball or a puck or similar objects.

According to a preferred embodiment, said protection device 7 may be produced in the same kind of material as the lamp base 10. In some applications however, the protection device 7 preferably shall be transparent and e.g. produced in Plexi glass, such that sufficiently evenly distributed light may be supplied.

In Fig. 2 there is shown a similar solution as presented in Fig. 1 wherein some modifications will be described in more detail. Firstly it is to be noted that in Fig. 2 there is use of a lamp base 21 with two different layers 22, 23. One lamp fixation layer 22 and one heat dissipating layer 23, e.g. made in aluminum. Preferably the heat dissipating layer 23 also presents downwardly directed protrusion 23A that may provide a desired gap G between the lowermost surface 26 of the heat dissipating layer 23 and the upper surface 110 of the lid 11. Preferably, the heat conducting layer 23 has a thickness between 1-4 mm, more preferred less than 3 mm, and preferably the heat conducting layer 23 to at least 70% comprises aluminium.

Furthermore, there is shown that, as is evident that the protecting devices 7 may in many installations not be needed and that accordingly the basic design of the invention may not include any protection device 7.

In Fig. 3 there is shown a more detailed view of a cross-section as encircled in Fig. 2. It is shown that the base body 10 preferably is produced from a plurality of layers 106 that mainly comprise cellulose, preferably at least 95%, and laminated to each other by means of an adhesive layer 107. It is foreseen that in place of cellulose fibers other kin of biobased fiber materials may be used, preferably made from renewable sources.

Preferably the adhesive 107 is a hot melt such that the layers of cellulose, e.g. board 106 may be easily laminated into a multitude of layers by means of the adhesive 107, preferably in one single laminating step, e.g. producing a long U-shaped body that may be cut into a plurality of lamp base bodies 10. This may be achieved by having adhesive 107 merely applied to one side of each cellulose layer 106, wherein in such a case it may be acceptable to merely have one side of the body without any adhesive. It is to be understood that the adhesive preferably is chosen to also have some sealing properties protecting the cellulose layer 106 from moist. In the most preferred embodiment at least one outer or inner board layer 106 is arranged with adhesive 107 on both sides such that improved sealing properties may be obtained by having all exposed surfaces covered by the adhesive 107 that also act as a sealing.

Preferably each board layer 106 has a grammage of 120-500 grams/m2 and, more preferred of 240 - 415 grams/m2, preferably including said liquid-retaining 107. Preferably the adhesive 107/ liquid-retaining layer is in the range of 5- 30 g/m2, preferably 7-20 g/m2 and wherein more preferred said liquid-retaining layer 107 mainly comprises Polyethylene and/or Polypropylene.

Preferably there are arranged at least four laminated layers of board 106 and adhesive 107. Thanks to having a plurality of layers a good moist retention may be achieved and also ability to attach devices by means of screws 27. Most preferred there are arranged at least four layers. Preferably, at least the some of the layers of board 106, more preferred all layers, are treated with flame retardant (e.g. AKD), e.g. by applying on one or two of the surfaces and/or by adding it to the pulp in the board production process.

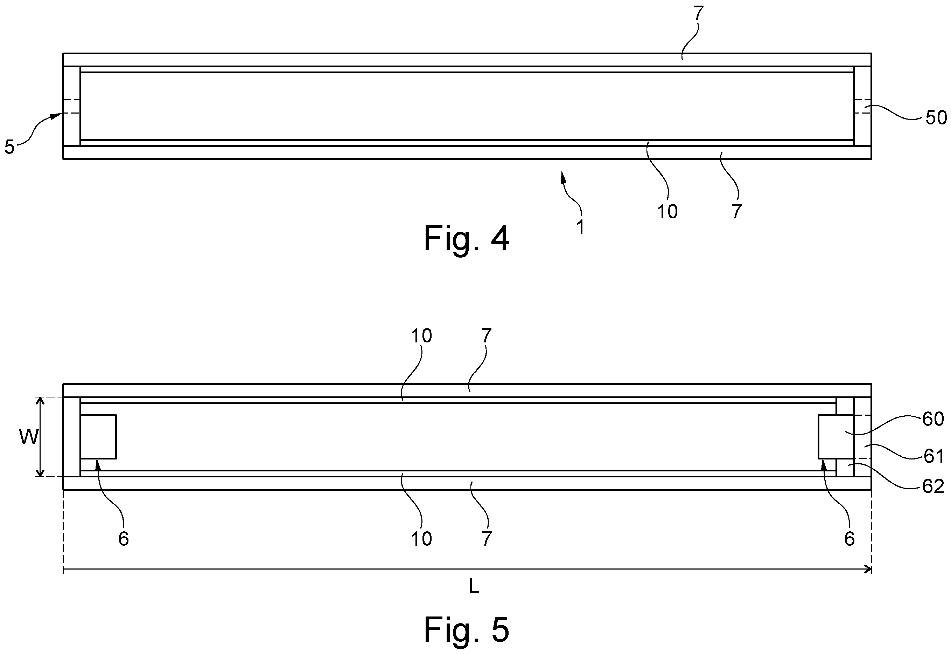

In Figs. 4 and 5 there are shown views from above of a Led lamp 1 according to the invention where it is schematically shown that there may be arranged protection devices 7 as mentioned in connection with Fig. 1, but without any curvature, i.e. being flat. It is shown that a preferred embodiment is rectangularly having a U-shaped base body 10 with a length L that is many times longer, at least twice, than the width W of the base body 10.

Furthermore it is shown in Fig 4 that there may be arranged end portions 51 that are arranged with passages 50 to enable passage of cables for supply of electricity to and for control of the LED lamp 1.

In Fig. 5 it is shown that basically the same view as in Fig. 4 but where there are arranged socket devices 6 which may facilitate easy connection of the LED lamp 1 to power and control. Preferably such an arrangement will comprise a socket body 60 and a socket holding end wall 61, and at least one support piece 62 assisting in keeping the socket securely attached within the lamp 1.

It is evident for the skilled person that a variety of modification may be done within the scope of the claims. For instance, it is foreseen that at square rectangular shape may be within the ambit of the invention of the kind used in ceilings, e.g. having each side being in the range of 400 to 700 mm. A specific design for such a ceiling LED lamp has been tested, that falls beside the ambit of claim 1, which may be the object for its own protection, via a divisional application. The tested square rectangular LED lamps has the support structure made in corrugated board, preferably there is a use of a support body comprising three layers of corrugated board, wherein the total thickness is within the range of 13-16 mm, more preferred 14-15 mm, having a weight in the range of 1800 -2500 g/m2, more preferred at least 1900 g/m2, wherein at least two layers (preferably the outer layers) have the same thickness and/or either the three layers have the same thickness and/or the central layer has a smaller thickness than the outer layers.

## Claims

1. LED lamp, comprising a lamp base (1) and a lamp device (2) arranged at said lamp base (1) comprising a plurality of LED lamps (20), wherein said lamp base (1) mainly consists of cellulose fibers, **characterized in that** said lamp base (1) has a rectangular shape and to at least 90% consists of cellulose fibers and that said LED lamps (20) are attached to a lamp device base (21) including a heat conducting layer (23) with a thermal conductivity of over 200 W/(m · K) and that each of said LED lamp (20) is of a kind emitting over 100 lumens /watt.

2. LED lamp according to claim 1, **characterized in that** said LED lamps (20) are directly attached to said heat conducting layer (23).

3. LED lamp according to claim 1, **characterized in that** said LED lamps (20) are attached to an intermediate lamp holding layer (22) that is attached to said heat conducting layer (23).

4. LED lamp according to claim 2 or 3, **characterized in that** said heat conducting layer (23) has a thickness between 1-4 mm and preferably that said heat conducting layer (23) to at least 70% comprises aluminium.

5. LED lamp according to claim 1, **characterized in that** there is arranged a gap (3) between said lamp device base (21) and said lamp base (1), wherein preferably said gap (3) is in the range of 0,1- 5 mm, more preferred in the range 0,5 to 2 mm.

6. LED lamp according to claim 1, **characterized in that** said lamp base (1) comprises a at least one cellulose body (10, 11) having at least one outer liquid-retaining layer (107), preferably in the range of 5- 30 g/m2, preferably 7-20 g/m2 and wherein more preferred said liquid-retaining layer (107) comprises Polyethylene and/or Polypropylene.

7. LED lamp according to claim 6, **characterized in that** said at least one base body (10, 11) comprises a plurality of board layers (106) adhesively attached to each other by means said liquid-retaining layer (107) being a heat adhesive, arranged to melt due to applied heat, preferably including 4-10 board layers (106) having said liquid-retaining layer (107) on at least one side.

8. LED lamp according to claim 7, **characterized by** each of said board layer having a grammage of 120-500 grams/m2 and, more preferred of 240 - 415 grams/m2, preferably including said liquid-retaining layer (107).

9. LED lamp according to claim 6, **characterized in that** said lamp base (1) comprises a U-shaped body part (10) and a flat body part (11), wherein said flat body part (11) has a driver (4) attached thereto and arranged to be attached to said U-shaped body part (10) bridging the upper leg ends (10A, 10B) of said U-shaped body part (10), wherein preferably there are arranged support members (12A, 12B) at the inside of said U-shaped body part (10), which support members (12A, 12B) are arranged to support said flat body part (11), and more preferred wherein said U-shaped body part (10) is formed by a solid integral body part.

10. LED lamp according to claim 1, **characterized in that** there is arranged at least one protecting members (7), preferably two, having a protruding portion (70) that protrudes a substantial distance (h) further than the outer surface (25) of said lamp device (2), wherein preferably a line (L) passing through an outer end (70A) of said protruding portion (70) and a part thereof in level with said outer surface (25) forms an acute angle (α), preferably in the range of 50 to 80°.
